# EUROPÄISCHE PATENTSCHRIFT

(11) **EP 0 683 331 B1**
(45) Veröffentlichungstag und Bekanntmachung des Hinweises auf die Patenterteilung: **21.10.1998**
(21) Anmeldenummer: 95102151.8
(22) Anmeldetag: 16.02.1995
(51) Int. Cl.: F16D 65/12

(54) **Radbremsscheibe für Schienenfahrzeuge**
Wheel brake disc for railway vehicles
Disque de frein monté sur la roue pour véhicules ferroviaires

(30) Priorität: 20.05.1994 DE 4417813
(43) Veröffentlichungstag der Anmeldung: 22.11.1995
(73) Patentinhaber: KNORR-BREMSE Systeme für Schienenfahrzeuge GmbH, 80809 München (DE)
(72) Erfinder: Wirth, Xaver, Dr., D-85737 Ismaning (DE); Schörwerth, Mathias, D-82538 Geretsried (DE); Seidl, Johann, D-84513 Töging (DE)

(56) Entgegenhaltungen:
- DE-A- 1 530 241
- DE-A- 3 839 073
- DE-C- 2 941 700

## Beschreibung

Die Erfindung betrifft eine Radbremsscheibe nach dem Gattungsbegriff des Patentanspruches 1.

Zur Befestigung von Reibringen an Schienenfahrzeugrädern werden bei bekannten Konstruktionen (DE-A-31 14 995) zu beiden Seiten der Radscheibe gesonderte Gleitsteinanordnungen verwendet, welche die Aufgabe besitzen, eine Zentrierung der Reibringe zu gewährleisten, wenn diese temperaturbedingt die Neigung besitzen, sich gegenüber dem Radsteg bzw. der Radscheibe zu bewegen. Bei Befestigungen dieser Art sind folgende Aufgaben zu erfüllen: Es ist das Drehmoment zu übertragen, wobei der Reibring bzw. die Reibringe konzentrisch zur Achse zu halten sind, auch im heißen, ausgedehnten Zustand. Die Befestigungs- und Führungsanordnung muß insbesondere in der Lage sein, dynamische Belastungen (Stöße) aufzunehmen. Die Reibringe müssen "eben" gehalten bleiben, d. h. eine konische Deformation infolge Plastifizierung der Reibflächen infolge hoher Reibflächentemperatur soll verhindert werden. Es soll auch der Einsatz geteilter Reibringe ermöglicht sein, wodurch ein Reibringtausch ohne Abpressen des Rades durchführbar ist. Anordnungen der genannten Art sollen zudem kostengünstig herstellbar und einfach montierbar sein.

Die Aufgabe der vorliegenden Erfindung besteht darin, eine Radbremsscheibe der gattungsgemäßen Art so auszugestalten, daß sie gegenüber bekannten Anordnungen trotz vereinfachten Aufbaues den vorstehenden Anforderungen gerecht wird.

Zur Lösung dieser Aufgabe dienen die Merkmale nach dem Kennzeichnungsteil des Patentanspruches 1.

Durch Einsatz der Doppelgleitsteine ist in baulich sehr einfacher Weise eine radialsymmetrische Führung beider Reibringe an der Radscheibe gewährleistet. Es ist demnach eine exakte Lagezentrierung sichergestellt (keine Unwuchtprobleme). Es besteht Planparallelität der aus den Reibringen bestehenden Reibscheibe, sowohl im kalten wie im heißen Zustand. Durch die Art der Doppelgleitstein-Zentrierung ist eine einfache Fertigung und einfache Montage der Reibringe ohne Sonderwerkzeuge ermöglicht. Es liegt Gewichtsoptimierung vor, da keine zusätzlichen Befestigungsstege oder Anbauteile benötigt werden. Die Befestigungs- und Zentrieranordnung ist universell einsetzbar, da die Befestigung im Bereich der Mitte des Radsteges bzw. der Radscheibe erfolgt, d.h. am Ort der kleinsten Spannungen im Rad. Die Art der Befestigung und der radialen Führung erlaubt auch den Einsatz geteilter Reibringe. Von den Reibringen an der Rückseite derselben sich erstreckende, in Anlage an der Reibscheibe befindliche Kühlrippen können zu einer zusätzlich unmittelbaren Wärmeableitung in den Radsteg beitragen.

Vorteilhafte Ausgestaltungen und Weiterbildungen sind in weiteren Patentansprüchen aufgeführt.
Fig.1 ist eine halbierte Schnittansicht einer an einem Schienenfahrzeugrad befestigten, aus zwei Reibringen bestehenden Radbremsscheibe unter Darstellung einer sie durchsetzenden, zur Befestigung dienenden Schraube;
Fig.2 ist eine nach Fig.1 linksseitige Draufsicht auf einen Reibring; und
Fig.3 ist eine vergrößerte, in Umfangsrichtung verlaufende Schnittansicht eines der Doppelgleitsteine unter Darstellung seiner Position zur Radscheibe und zu den Zentrieraugen der Reibringe.

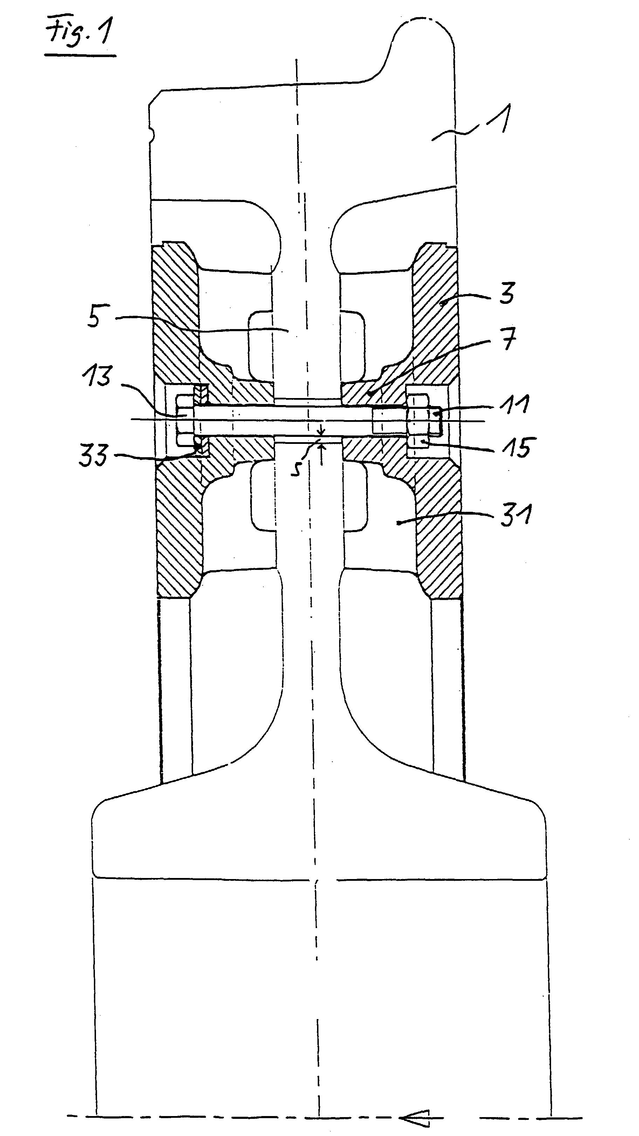

In Fig.1 der Zeichnung ist in halbierter Schnittansicht das Rad 1 eines Schienenfahrzeugs dargestellt; an den beiden Seiten des Rades finden sich Reibringe 3, welche mit Hilfe der nachfolgend erläuterten Befestigungsan der Radscheibe 5 des Rades befestigt sind.

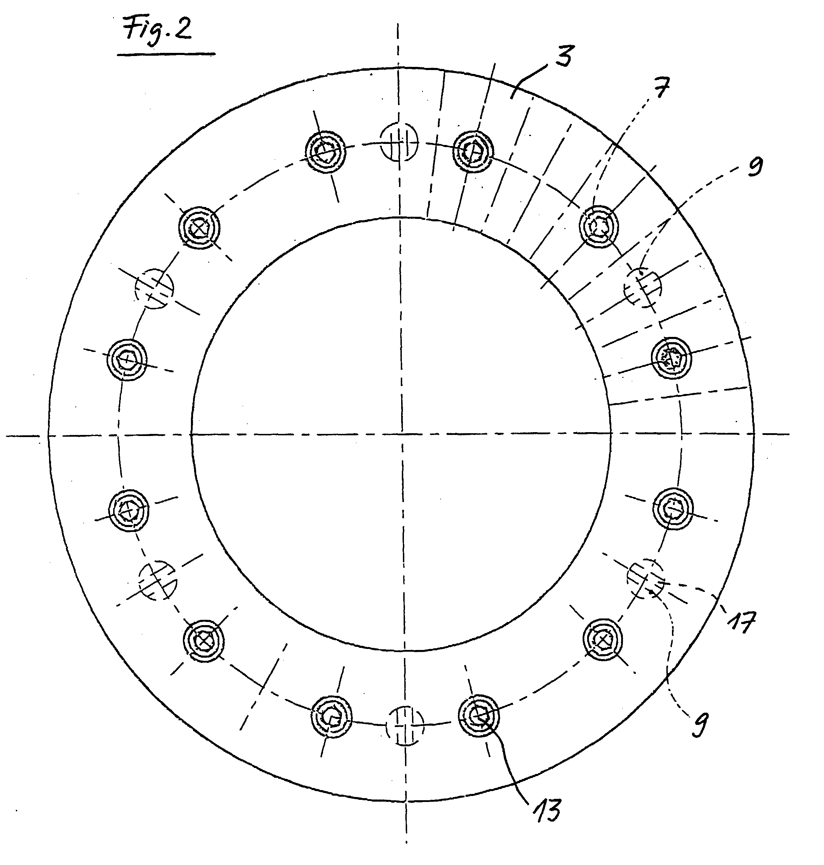

Gemäß Fig.1 und 2 erstrecken sich von den Reibringen 3 Befestigungsaugen 7 und Zentrieraugen 9 in Richtung der Radscheibe 5, wobei sie abwechselnd z.B. auf gleichem Durchmesser angeordnet sind (Fig.2). Die Befestigungsaugen 7 sind von Schrauben 11 durchdrungen, welche mit einem gewissen Spiel s (Fig.1) die Radscheibe 5 durchsetzen, derart, daß die Reibringe 3 von den Schraubköpfen 13 und den Muttern 15 an das Rad 1 geklemmt werden.

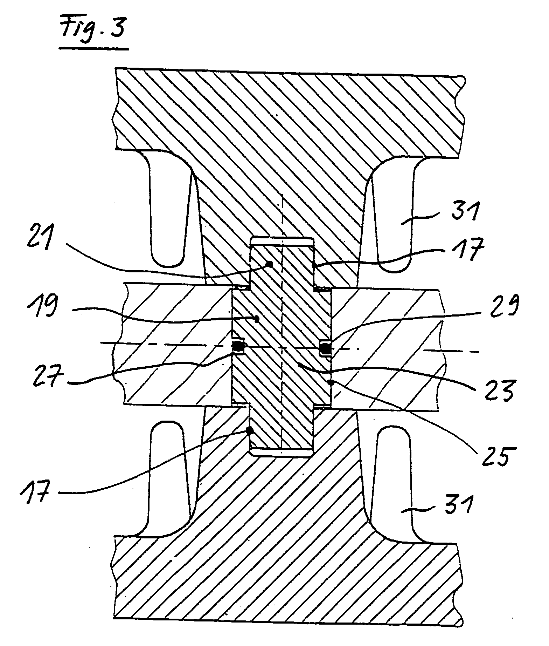

Die Zentrieraugen 9 dienen zur Zentrierung der Reibringe bei der Montage und während des Betriebs (thermisch bedingtes Atmen). Zu diesem Zwecke weisen die Zentrieraugen 9 radial durchgehende Passfedernuten 17 (Fig.2 und 3) auf in welchen Doppelgleitsteine 19 mit an ihren Enden ausgebildeten keilförmigen Passfedern 21 geführt sind (Fig.3). Der Mittelteil der Doppelgleitsteine 19 ist als zylindrischer Körper 23 ausgebildet, welcher in einer entsprechenden Radbohrung 25 eingefügt ist, derart, daß zu beiden Seiten der Radscheibe 5 die passfederartigen Enden der Doppelgleitsteine 19 herausragen. Radial ausgerichtet bilden die Passfedern der Doppelgleitsteine zusammen mit den Passfedernuten 17 der Zentrieraugen 9 der Reibringe gleichmäßig auf einem Kreisumfang angeordnete Nut- und Federsysteme, wodurch eine eindeutige Lagezuordnung zwischen Rad 1 und Reibringen 3 erreicht wird.

Um zu verhindern, daß bei der Montage der Reibringe die Doppelgleitsteine aus den Radbohrungen 25 herausfallen oder sich verdrehen, besitzen sie gemäß Fig.3 in ihrer Mitte jeweils eine umlaufende Nut 27, in welcher ein elastisch oder plastisch deformierbarer Ring 29 sitzt. Der Ring 29 vermittelt ausreichende Reibung zwischen dem Doppelgleitstein 19 und der zugeordneten Radbohrung 25 und kann zum Beispiel aus einem handelsüblichen O-Ring bestehen.

Bei der in Fig.2 dargestellten Ausführungsform sind zwölf Befestigungsschrauben am Umfang vorgesehen, die Zahl kann jedoch auch höher oder niedriger sein. Von den Zentrieraugen werden funktionsbedingt mindestens drei benötigt; sie liegen zweckmäßigerweise jeweils zwischen zwei Befestigungsaugen.

Um eine Konizität der Reibringe 3 zu vermeiden, sind Kühlrippen 31 an der Reibringrückseite am Außen- und Innendurchmesser so ausgebildet, daß sie die Radscheibe 5 des Rades berühren. Das Rad ist zu diesem Zweck in den entsprechenden Bereichen planparallel ausgebildet, wobei die Reibringe ihre punktsymmetrische Lage durch sogenanntes Reibgleiten verändern können. Gemäß Fig.1 weisen die Schraubverbindungen zur Erhöhung der Elastizität und somit zur Verringerung des Setzbetrages vorzugsweise jeweils zwei konische Spannscheiben 33 unter dem Schraubkopf 13 auf.

Die Reibringe sind über die Doppelgleitsteine lagefixiert; eine Exzentrizität gegenüber der Sollage ist nur im Rahmen der Fertigungsungenauigkeit möglich. Die Zentrierung bleibt auch bei heißer Scheibe erhalten, da die radial verlaufenden Führungsfedern punktsymmetrische Verschiebungen zulassen. Das Bremsmoment wird bei der beschriebenen Anordnung durch Reibschluß (Scheibenvorspannung) zwischen Reibring und Steg bzw. Scheibe des Rades übertragen.

In alternativer Ausführung kann die Nut- und Federanordnung an den Doppelgleitsteinen vertauscht sein d.h., daß sich an den Enden der Doppelgleitsteine anstelle der Passfedern Nuten befinden, in welchen von den Zentrieraugen vorstehende Keile bzw. Passfedern geführt sind. Es ist auch eine Anordnung möglich, bei welcher die Befestigungsaugen und die Zentrieraugen auf unterschiedlichen Reibringdurchmessern vorgesehen sind.

Die Ebene der Befestigungs- und Zentrieraugen kann gegenüber der Ebene der Rippenauflageflächen der Kühlrippen geringfügig zurückliegen; hierdurch ergibt sich eine Vorspannung zwischen Reibring und Steg bzw. Scheibe.

Es ist auch eine Anordnung möglich, bei welcher die Passfedern oder wahlweise die Passfedernuten in das Rad integriert sind (umlaufender Ringabsatz, radial gefräst). Die jeweilige Gegenform liegt dann entsprechend auf den Reibringen.

### Bezugszeichenliste

- 1: Rad
- 3: Reibring
- 5: Radscheibe
- 7: Befestigungsauge
- 9: Zentrierauge
- 11: Schraube
- 13: Schraubkopf
- 15: Mutter
- 17: Passfedernut
- 19: Doppelgleitstein
- 21: Passfeder
- 23: Körper
- 25: Radbohrung
- 27: Nut
- 29: Ring
- 31: Kühlrippe
- 33: Spannscheibe

## Patentansprüche

1. Radbremsscheibe für Schienenfahrzeuge, mit zu beiden Seiten des Rades (1) angeordneten Reibringen (3), welche mit unter Abstand zueinander angeordneten, die Reibringe (3) und die Radscheibe (5) durchsetzenden Schrauben (11) gegenüber der Radscheibe (5) verspannt und mittels Gleitsteinen an der Radscheibe (5) radial geführt sind, wobei sich im Durchgangsbereich der Schrauben (11) von den Reibringen (3) Befestigungsaugen (7) in Richtung der Radscheibe (5) erstrecken und an dieser festgeklemmt sind, gekennzeichnet durch folgende Merkmale:
a) die Gleitsteine sind als zu beiden Seiten der Radscheibe (5) wirkende Doppelgleitsteine (19) gebildet, welche auf einem Reibringdurchmesser unter Abstand zueinander jeweils einen die Radscheibe (5) durchsetzenden zylindrischen Körper (23) aufweisen ; und
b) zu beiden Seiten der Radscheibe (5) sind Zentrieraugen (9) der beiden Reibringe (3) an den von den Seiten der Radscheibe (5) vorstehenden Enden der Doppelgleitsteine (19) geführt.

2. Radbremsscheibe nach Anspruch 1, gekennzeichnet durch folgende Merkmale:
a) die zu beiden Seiten der Radscheibe (5) abstehenden Enden der Doppelgleitsteine (19) sind jeweils in Form radial gerichteter Passfedern (21) ausgebildet;
b) den Passfedern zugewandt sind die Zentrieraugen (9) jeweils an der Innenseite der Reibringe (3) ausgebildet; und
c) die Zentrieraugen (9) weisen endseitig offene, radial gerichtete Passfedernuten (17) auf, in welchen die Passfedern (21) eingreifen, derart, daß die Reibringe (3) radial zentriert geführt sind.

3. Radbremsscheibe nach einem der vorangehenden. Ansprüche, dadurch gekennzeichnet, daß die Doppelgleitsteine (19) im Bereich ihres zylindrischen Körpers (23) jeweils einen umlaufenden elastischen Ring (29) tragen, welcher mittels Reibeingriff die Lagepositionierung des Doppelgleitsteins (19) in seiner Bohrung in der Radscheibe (Radsteg) sichert.

4. Radbremsscheibe nach einem der vorangehenden Ansprüche, dadurch gekennzeichnet, daß die Doppelgleitsteine (19) und die paarweise zugeordneten Zentrieraugen (9) der Reibringe jeweils zwischen zwei Befestigungsschrauben (11) mit den diesen paarweise zugeordneten Befestigungsaugen (7) angeordnet sind.

5. Radbremsscheibe nach einem der vorangehenden Ansprüche, dadurch gekennzeichnet, daß die Befestigungsaugen (7) und die Zentrieraugen (9) auf gleichen Reibringdurchmessern angeordnet sind.

6. Radbremsscheibe nach einem der Ansprüche 1-4, dadurch gekennzeichnet, daß die Befestigungsaugen und die Zentrieraugen auf unterschiedlichen Reibringdurchmessern liegen.

7. Radbremsscheibe nach einem der vorangehenden Ansprüche, dadurch gekennzeichnet, daß die beiden Enden der Doppelgleitsteine (19) radial gerichtete Passfedernuten tragen, in welche von den Zentrieraugen der beiden Reibringe vorstehende, radial gerichtete Passfedern relativ beweglich eingreifen.

## Claims

1. Wheel brake disc for rail vehicles, having friction rings (3) arranged on both sides of the wheel (1), the rings being clamped with respect to the wheel disc (5) by screws (11) which are spaced apart from each other and pass through the friction rings (3) and the wheel disc (5), and being guided radially by means of slide blocks on the wheel disc (5) and, in the passage region of the screws (11), securing lugs (7) extend in the direction of the wheel disc (5) and are fixedly clamped to it, characterised by the following features:
a) the slide blocks are formed as double slide blocks (19) acting on both sides of the wheel disc (5) and respectively having a cylindrical body (23) passing through the wheel disc (5) and arranged spaced apart on a friction ring diameter; and
b) on both sides of the wheel disc (5) centering lugs (9) of the two friction rings (3) are guided on the ends of the double slide blocks (19) protruding from the sides of the wheel disc (5).

2. Wheel brake disc according to claim 1,
characterised by the following features:
a) the ends of the double slide blocks (19) protruding on both sides of the wheel disc (5) are respectively constructed in the form of radially directed keys (21);
b) facing the keys the centering lugs (9) are respectively formed on the inner side of the friction rings (3); and
c) the centering lugs (9) have radially directed keyways (17) open at the end, in which the keys (21) engage in such a way that the friction rings (3) are guided in radially centred fashion.

3. Wheel brake disc according to one of the preceding claims, characterised in that in the region of their cylindrical body (23) the double slide blocks (19) each carry an encircling elastic ring (29) which secures the positioning of the double slide block (19) in its bore in the wheel disc (wheel web) by means of frictional engagement.

4. Wheel brake disc according to one of the preceding claims, characterised in that the double slide blocks (19) and the associated pairs of centering lugs (9) of the friction rings are respectively arranged between two securing screws (11) with the securing lugs (7) associated in pairs with them.

5. Wheel brake disc according to one of the preceding claims, characterised in that the securing lugs (7) and the centering lugs (9) are arranged on the same friction ring diameters.

6. Wheel brake disc according to one of claims 1 to 4, characterised in that the securing lugs and the centering lugs lie on different friction ring diameters.

7. Wheel brake disc according to one of the preceding claims, characterised in that the two ends of the double slide blocks (19) carry radially directed keyways, into which radially directed keys, protruding from the centering lugs of the two friction rings, engage in a relatively movable manner.

## Revendications

1. Disque de frein monté sur roue pour véhicules ferroviaires, comportant des anneaux de friction (3), qui sont disposées des deux côtés de la roue (1), sont serrés par rapport au disque de roue (5) par des vis (11) distantes les unes des autres et traversant les anneaux de friction (3) et le disque de roue (5) et sont guidées radialement au moyen de coulisseaux sur le disque de roue (5), dans lequel des oeillets de fixation (7) s'étendent en direction du disque de roue (5) à partir des anneaux de friction (3), dans la zone de passage des vis (11) et sont serrés fermement sur le disque de roue, caractérisé par les caractéristiques suivantes :
a) les coulisseaux sont formés par des coulisseaux doubles (19) qui agissent des deux côtés du disque de roue (5) et comportent sur un cercle des plaques de friction et à distance l'un de l'autre, des corps cylindriques respectifs (23) traversant le disque de roue (5) ; et
b) des deux côtés du disque de roue (5), des oeillets de centrage (9) des deux anneaux de friction (3) sont guidés sur les extrémités des coulisseaux doubles (19), qui font saillie sur les faces du disque de roue (5).

2. Disque de frein monté sur roue selon la revendication 1, caractérisé par les caractéristiques suivantes :
a) les extrémités des coulisseaux doubles (19), qui font saillie sur les deux faces du disque de roue (5), sont réalisées respectivement sous la forme de clavettes parallèles (21) dirigées radialement ;
b) les oeillets de centrage (9) sont formés respectivement sur la face intérieure des bagues de friction (3) en étant tournés vers les clavettes parallèles ; et
c) les oeillets de centrage (9) possèdent des rainures (17) pour, clavettes parallèles, qui sont ouvertes à leur extrémité et sont dirigées radialement et dans lesquelles les clavettes parallèles (21) s'engagent de telle sorte que les anneaux de friction (3) sont guidés en étant centrés radialement.

3. Disque de frein monté sur roue selon l'une des revendications précédentes, caractérisé en ce que les coulisseaux doubles (19) portent chacun, dans la zone de leur corps cylindrique (23), une bague élastique cylindrique circonférentielle (29), qui garantit, au moyen d'un engagement par friction, le positionnement du coulisseau double (19) dans son perçage dans le disque de roue (flasque de roue).

4. Disque de frein monté sur roue selon l'une des revendications précédentes, caractérisé en ce que les coulisseaux doubles (19) et les oeillets de centrage (9), qui sont associés par couples, des anneaux de friction sont disposés respectivement entre deux vis de fixation (11) avec les oeillets de fixation (7) qui sont associés par couples à ces vis.

5. Disque de frein monté sur roue selon l'une des revendications précédentes, caractérisé en ce que les oeillets de fixation (7) et les oeillets de centrage (9) sont situés sur les mêmes circonférences des anneaux de friction.

6. Disque de frein monté sur roue selon l'une des revendications 1-4, caractérisé en ce que les oeillets de fixation et les oeillets de centrage sont situés sur des circonférences différentes des anneaux de friction.

7. Disque de frein monté sur roue selon l'une des revendications précédentes, caractérisé en ce que les deux extrémités des coulisseaux doubles (19) portent des rainures radiales pour clavettes parallèles, dans lesquelles s'engagent, avec possibilité de déplacement relatif, des clavettes parallèles radiales qui font saillie à partir des oeillets de centrage des deux anneaux de friction.
